# FASCICULE DE BREVET EUROPEEN

(11) **EP 1 417 456 B1**
(45) Date de publication et mention de la délivrance du brevet: **11.05.2005**
(21) Numéro de dépôt: 02790196.6
(22) Date de dépôt: 15.07.2002
(51) Int. Cl.: G01C 21/34, G08G 1/0968

(54) **PORTAIL DE SERVICES DE TELECOMMUNICATIONS COMPRENANT UN SERVEUR AVEC RECONNAISSANCE VOCALE ET EQUIPMENT DE NAVIGATION ET DE GUIDAGE UTILISANT LEDIT PORTAIL**
TELEKOMMUNIKATIONSDIENSTPORTAL MIT EINEM SPRACHERKENNUNGSSERVER UND NAVIGATIONS- UND FÜHRUNGSGERÄTE, DIE DAS PORTAL BENUTZEN
TELECOMMUNICATION SERVICE PORTAL COMPRISING A VOICE RECOGNITION SERVER AND NAVIGATION AND GUIDANCE EQUIPMENT USING SAID PORTAL

(30) Priorité: 23.07.2001 FR 0109818
(43) Date de publication de la demande: 12.05.2004
(73) Titulaire: FRANCE TELECOM, 75015 Paris (FR)
(72) Inventeur: OLLIVIER, Jean-Luc, F-14280 Authie (FR); PICARD, Patrick, F-14200 Herouville Saint Clair (FR); LEPETIT, Olivier, 14800 Deauville (FR)
(74) Mandataire: Bentz, Jean-Paul
(86) Numéro de dépôt international: PCT/FR2002/002514
(87) Numéro de publication internationale: WO 2003/010494

(56) Documents cités:
- EP-A- 0 933 616
- WO-A-01/26350
- WO-A-01/69570
- US-A- 4 991 216
- US-A- 6 108 410

## Description

L'invention concerne un portail de services de télécommunications pour la navigation routière. Elle concerne également un équipement de navigation et de guidage pour véhicule utilisant ledit portail.

Les nouvelles technologies permettent aujourd'hui d'offrir aux conducteurs et aux passagers plus de sécurité, plus de confort et plus de moyens de communication. En effet, la voiture intelligente est devenue réalité.

Les services d'aide à la navigation sont offerts aujourd'hui sur les véhicules et se présentent sous la forme d'un équipement embarqué comprenant un ordinateur de bord disposant d'informations cartographiques sur CD-ROM, cet ordinateur étant couplé à un système de radio positionnement GPS pour la localisation du véhicule.

Les techniques actuelles utilisent des applications locales c'est-à-dire des applications embarquées (des programmes de navigation routière embarqués). Après avoir choisi l'option de trajet, l'utilisateur choisit son lieu de départ et son lieu d'arrivée. Pour en informer le système, l'utilisateur (le conducteur) doit à chaque fois entrer manuellement ces informations au moyen d'un clavier ou d'une télécommande. On comprend tout de suite que cette saisie d'information est une forte contrainte pour l'utilisateur de ces systèmes de navigation et de guidage.

Le système embarqué restitue les informations de guidage au conducteur soit par affichage sur l'écran de son terminal de navigation, soit par un système de synthèse vocale. Cependant, il est important de préciser qu'avec les systèmes existants, les informations que le conducteur reçoit ne sont pas actualisées, ni mises à jour régulièrement en fonction des aléas de la circulation. Les résultats sont donc figés quel que soit le jour et l'heure de la semaine.

On comprend ainsi que les informations transmises au conducteur peuvent donc ne pas être optimales et la navigation qui en découle très souvent inexacte.

La présente invention permet de remédier à ces inconvénients.

Le premier inconvénient des systèmes existant est résolu dans la présente invention par l'utilisation d'une interface de reconnaissance vocale. Cette interface permet de simplifier considérablement la tâche des conducteurs et procure notamment une amélioration considérable de l'ergonomie du système de navigation.

Le deuxième inconvénient est résolu par l'utilisation d'un serveur distant capable de comprendre la demande du conducteur et de la traiter en tenant compte des conditions en temps réel de trafic et autres contraintes.

En effet le conducteur prononce le lieu de destination au système et un serveur placé dans le réseau « comprend » la demande et la traite. Le serveur est capable de mettre à jour les informations routières et les informations de trafic.

Un système de guidage dynamique d'un véhicule conforme au préambule de la revendication 1 est connu de EP-A-933 616.

Un premier objet de l'invention concerne un portail de services de télécommunications relié à un réseau de téléphonie mobile permettant d'offrir un service de guidage routier en temps réel à des véhicules comportant un équipement de navigation et plus particulièrement un ordinateur de bord couplé à un système de positionnement tel que le GPS (Global Positioning System) et un terminal de télécommunication. Le terminal de télécommunication peut être un téléphone mobile ou tout terminal avec modem radio voix/données de type GSM, GPRS, ou UMTS.

La présente invention a plus particulièrement pour objet un portail de services de télécommunications relié à au moins un réseau de télécommunications mobile comprenant au moins un serveur de navigation routière couplé à une interface de reconnaissance vocale afin de fournir des informations de guidage en temps réel, en réponse à une destination qui lui a été communiquée par l'utilisateur au moyen d'un terminal de télécommunications connecté au dit réseau, caractérisé en ce que le serveur de navigation comporte des moyens d'analyse acoustique du signal reçu.

Selon une autre caractéristique de l'invention, l'interface de reconnaissance vocale est assurée par une fonction intégrée du serveur.

Selon une autre caractéristique, le portail comprend un serveur d'informations du trafic couplé au serveur de navigation routière.

Selon une autre caractéristique, le serveur comprend une base de données cartographiques couplée au serveur de navigation.

Selon une autre caractéristique, le serveur de navigation comprend des moyens de couplage à un serveur annuaire électronique.

Avantageusement, le terminal de télécommunications est un téléphone mobile ou tout terminal avec un modem radio voix/données de type GSM ou GPRS ou UMTS ou USSD.

Selon une autre caractéristique, le serveur est couplé à un centre d'appel et les communications sont re-routées vers ce centre d'appel en cas d'échec de la reconnaissance vocale.

L'invention a également pour objet un procédé de navigation et de guidage pour véhicule selon la revendication 8. Ce dernier fait appel à un ordinateur de bord couplé à un système de radio positionnement, principalement en ce que l'ordinateur de bord comporte une liaison avec un terminal de télécommunication pour recevoir des informations de guidage en temps réel, en réponse à une destination communiquée oralement par l'utilisateur au moyen dudit terminal, lesdites informations de guidage étant fournies par un serveur de navigation distant couplé à une interface de reconnaissance vocale et accessible à partir dudit terminal au moyen d'un réseau de téléphonie mobile.

La liaison avec le téléphone mobile permet en outre à l'ordinateur de bord et/ou à l'utilisateur de transmettre des données de positionnement du véhicule en temps réel au serveur de navigation distant.

Selon un mode de réalisation, la destination donnée par l'utilisateur est captée par le microphone du terminal de télécommunication, le signal correspondant qui est le signal de parole de l'utilisateur est transmis par le réseau ; et le serveur comporte des moyens d'analyse acoustique du signal de parole reçu afin de transmettre le signal analysé à l'interface de reconnaissance vocale.

Selon un autre mode de réalisation, la destination donnée par l'utilisateur est captée par un microphone spécifique, le signal de parole est transmis au terminal de télécommunication qui comporte des moyens de codage dudit signal, le signal codé étant transmis au serveur et le serveur comporte des moyens d'analyse acoustique du signal de codé reçu afin de transmettre le signal analysé à l'interface de reconnaissance vocale.

Selon un mode de réalisation, la destination donnée par l'utilisateur est captée par un microphone spécifique, le terminal de télécommunication comporte des moyens d'analyse acoustique pour analyser le signal issu du microphone et transmettre des coefficients acoustiques correspondant à ce signal, au serveur pour traitement par l'interface de reconnaissance vocale.

Selon un autre mode de réalisation, la destination donnée par l'utilisateur est captée par un microphone spécifique et le terminal de télécommunication comporte des moyens d'analyse acoustique pour analyser le signal issu du microphone et transmettre des coefficients acoustiques correspondant à ce signal, au serveur pour traitement par l'interface de reconnaissance vocale.

Selon une autre caractéristique, les informations de guidage reçues sont émises sous la forme de messages courts du type SMS ou de données via GSM Data, ou GPRS ou UMTS ou USSD (Unstructured Supplementary Service Data).

D'autres particularités et avantages de l'invention apparaîtront clairement à la lecture de la description suivante qui est donnée à titre d'exemple non limitatif et en regard des figures sur lesquelles :
La figure 1 représente le schéma général d'un portail de services de télécommunications pour la navigation routière selon l'invention ;
La figure 2 représente un schéma d'un équipement de navigation routière apte à recevoir des informations de guidage fournies par le portail de service,
Les figures 3A à 3D représentent différents modes de réalisation pour l'ensemble du système : portail de services et équipement de navigation embarqué.

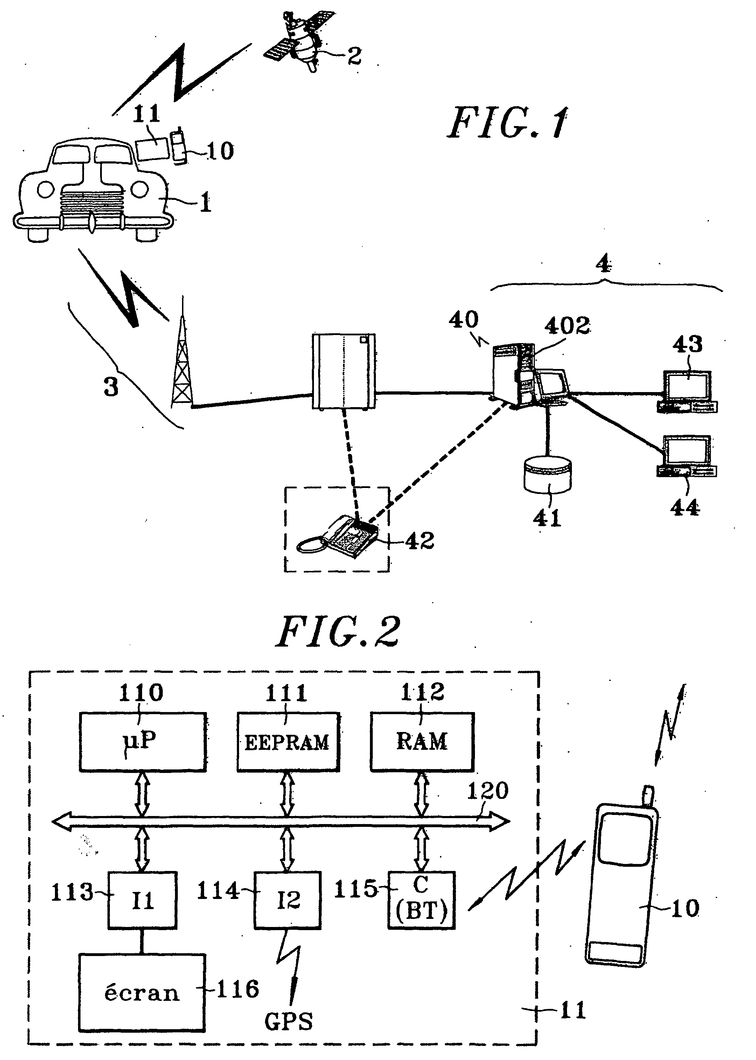

Dans l'exemple de réalisation illustré par la figure 1, l'ordinateur de bord est déjà équipé d'un système de navigation couplé à un système de positionnement par satellite GPS. Il dispose également d'informations tachymétriques et gyroscopiques. Le véhicule 1 comporte un équipement de navigation et de guidage réalisé par cet ordinateur de bord couplé selon cet exemple à un système de radio positionnement tel que le GPS (Global Positioning System). La position du véhicule est donnée à l'ordinateur de bord par ce système illustré par le satellite 2.

Le conducteur utilise son téléphone mobile 10 ou celui du véhicule pour communiquer avec le système et bénéficier d'une actualisation en temps réel du trajet en fonction des informations de trafic ou de météo fournies par un serveur distant 40 du portail de services 4.

Ainsi, le conducteur utilise son téléphone pour indiquer son lieu de destination au serveur distant. Le serveur 40 examine les conditions de circulation dans une zone couvrant les chemins possibles et renvoie ces informations au système de navigation via le téléphone mobile sous la forme de messages courts SMS par exemple (Short Messages Service) ou GSM Data ou de données via GSM Data ou GPRS ou UMTS ou USSD. Le système embarqué peut alors proposer un trajet qui tient compte des dernières conditions de circulation. Le système peut également réagir en direct aux données envoyées par le serveur en modifiant le chemin en cours de trajet.

Cette solution a l'avantage d'augmenter l'efficacité d'un système de navigation existant en utilisant le propre mobile du conducteur ou celui du véhicule pour se connecter à un serveur distant 40. Cette solution, suppose l'envoi en temps réel d'informations de position du véhicule au serveur distant 40, soit par GPS (via le mobile) soit directement par le conducteur qui donne oralement sa localisation. La vitesse instantanée du véhicule est une donnée importante dans l'évaluation de la position du véhicule entre deux relevés GPS.

Pour ce mode de réalisation le traitement de la navigation passe par un centre d'appel 42 (appel vers une opératrice) en cas d'échec de la reconnaissance vocale.

L'équipement de navigation installé dans le véhicule possède une liaison avec un téléphone mobile de manière à avoir un accès à travers un réseau de télécommunications 3 au portail de services de télécommunications 4 couplé à ce réseau 3.

Le téléphone mobile peut être le téléphone mobile [GSM GPRS ou WAP ou UMTS ou autre (i-mode au Japon)] personnel du conducteur ou un téléphone mobile embarqué ou un terminal Aurora©.Pour simplifier, on parlera de téléphone mobile quelle que soit la solution envisagée.

Le réseau de télécommunication est un réseau de téléphonie mobile GSM ou UMTS GPRS ou WAP ou autre par exemple.

La liaison entre le mobile et l'ordinateur de bord est une liaison courte distance par exemple Bluethooth ou infra rouge.

Le portail de télécommunications comprend le serveur de navigation 40 lequel est muni de ou couplé à des moyens de reconnaissance vocale sur la destination indiquée par un utilisateur au moyen d'un téléphone mobile. Le serveur 40 dispose d'informations sur le trafic et assure un service de guidage en temps réel tenant compte des conditions de circulation.

Le serveur 40 peut également être relié à une base de données telle qu'un annuaire électronique 41 pour améliorer la détermination de la destination et/ou simplifier l'ergonomie du dialogue vue par l'utilisateur. En effet le conducteur prononce un nom et le serveur 40 détermine l'adresse associée.

La reconnaissance vocale peut fonctionner dans un environnement bruité. La reconnaissance de la parole se fait sur le signal reçu comme s'il s'agissait d'un locuteur, ce qui permet au serveur de connaître la destination choisie par le conducteur.

Selon un autre mode de réalisation le traitement de la navigation peut être fait en distant.

Dans ce cas le serveur 40 stocke les informations de cartographie, de météo et de trafic. Les données de guidage sont ensuite envoyées à l'ordinateur de bord 11 ou au téléphone mobile 10 sous la forme de messages courts SMS ou de données via GSM Data ou GPRS ou UMTS ou USSD ou de messages sonores par synthèse vocale et/ou de visualisation sur cartographie.

Le conducteur prononce le lieu de destination au système et le serveur dans le réseau comprend la demande et la traite. Le serveur envoie les informations par fraction de trajet, ce qui permet d'actualiser le guidage venant du serveur.

Cette solution suppose également que le véhicule informe en continu le serveur de guidage 40 de sa position afin que ce dernier actualise le trajet. En pratique le conducteur signale oralement sa situation (par exemple la rue).

La figure 2 illustre un schéma de réalisation simplifiée d'un équipement de navigation et plus précisément de l'ordinateur de bord 11 du véhicule.

Cet équipement comporte au moins un processeur 110 relié à une pluralité de mémoires 111, 112 et à une pluralité d'interfaces 113, 114 avec le processeur à travers au moins un bus de communication 120. L'équipement comporte selon l'exemple illustré, au moins une mémoire de programme 111 de type électriquement programmable par exemple, au moins une mémoire vive de travail 112.

L'équipement comporte une interface de pilotage 113 d'un écran de visualisation 116, une interface émission-réception radio 114 pour le couplage avec le satellite de positionnement 2, et une interface d'émission-réception courte distance (Bluetooth) ou infrarouge 115 pour le couplage avec le téléphone mobile 10.

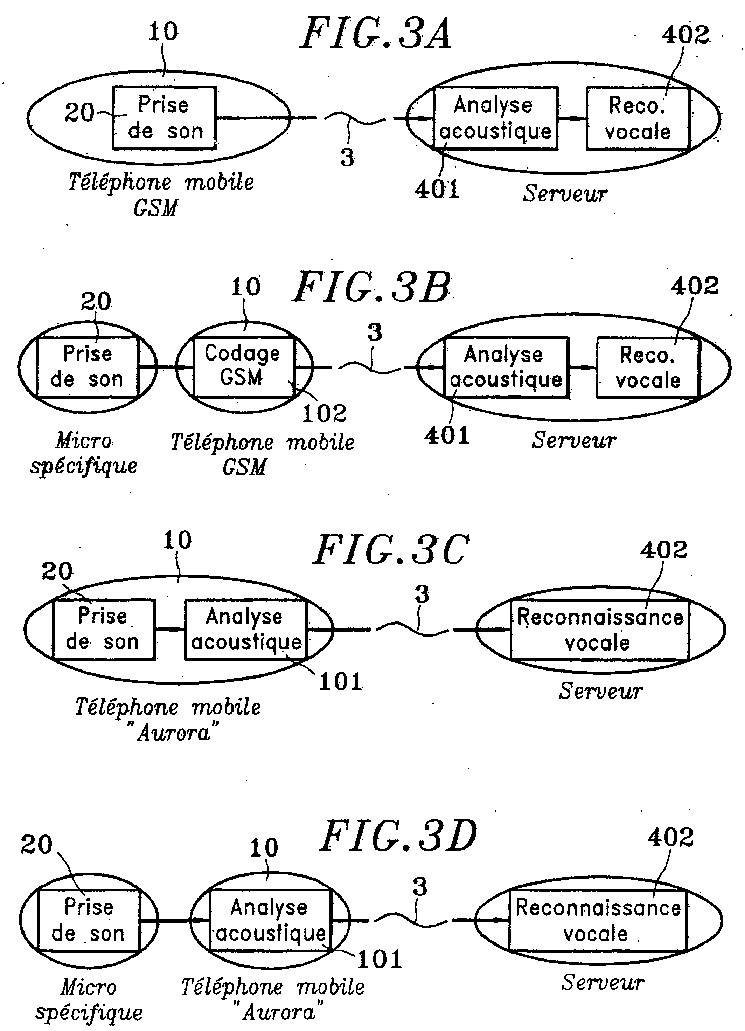

Les figures 3A à 3D correspondent à différentes variantes possibles pour le traitement de la parole de l'utilisateur du système.

Selon la première variante de réalisation, le téléphone mobile 10 envoie au serveur 40 le signal de parole sous sa forme brute (signal vocal) par la liaison de transmission 3. Dans ce cas, le signal reçu par le serveur peut être abîmé. Des moyens d'analyse acoustique 401 sont placés dans le serveur 40 en amont des moyens de reconnaissance vocale 402. Les moyens d'analyse sont réalisés par un processeur apte à extraire des paramètres représentatifs du signal de parole dénommés coefficients acoustiques.

Une autre solution illustrée par la figure 3B peut consister à effectuer une prise de son avec un microphone spécifique 20 (autre que celui du téléphone mobile), dans ce cas le signal vocal sera codé par le codeur 102 du téléphone 10. Dans cet exemple les moyens d'analyse acoustique 401 et de reconnaissance vocale 402 sont également placés dans le serveur 40.

Une autre solution illustrée par la figure 3C peut consister à faire une analyse acoustique en local au moyen d'un processeur 101 du téléphone mobile embarqué. La prise de son est réalisée selon cet exemple par le microphone 20 du téléphone. Le serveur 40 effectue alors une reconnaissance sur ces coefficients. Dans cette solution le volume des données transmises est moindre, ce qui permet de rendre le signal transmis robuste vis à vis des erreurs de transmission. En effet le signal étant plus court, on peut y adjoindre des codes correcteurs d'erreurs. On améliore ainsi les performances de la reconnaissance sur le signal reçu.

L'analyse acoustique peut aussi intégrer un débruitage du signal à la source, ce qui améliore les performances de la reconnaissance.

La figure 3D illustre une variante de la solution précédente selon laquelle la prise de son est effectuée par un microphone spécifique.

La présente invention a les avantages suivants :
- proposer une interface basée sur la reconnaissance de la parole de l'utilisateur pour la navigation routière,
- les performances et la puissance d'un serveur à comparer avec celles limitées d'un système embarqué,
- la fourniture d'informations temps réel (trafic, météo),
   - l'accès à des bases de données, annuaire électronique notamment,
   - gestion centralisée facilitant la mise à jour des contenus et des services,
   - apport d'autres services que la navigation grâce à la connexion à des bases de données de services supplémentaires 43 et 44.
- Utiliser les derniers progrès de la technologie de reconnaissance vocale.

## Revendications

1. Portail de services de télécommunications relié à au moins un réseau de télécommunications mobile comprenant au moins un serveur de navigation routière couplé à une interface de reconnaissance vocale afin de fournir des informations de guidage en temps réel, en réponse à une destination qui lui a été communiquée par l'utilisateur au moyen d'un terminal de télécommunications connecté au dit réseau, **caractérisé en ce que** le serveur de navigation comporte des moyens d'analyse acoustique du signal reçu.

2. Portail de services de télécommunications selon la revendication 1, **caractérisé en ce que** l'interface de reconnaissance vocale est assurée par une fonction intégrée du serveur.

3. Portail de services de télécommunications selon la revendication 2, **caractérisé en ce qu'**il comprend un serveur d'informations de trafic couplé au serveur de navigation routière.

4. Portail de services selon la revendication 1 ou la revendication 2, **caractérisé en ce qu'**il comprend une base de données cartographiques couplée au serveur de navigation.

5. Portail de services selon l'une quelconque des revendications précédentes, **caractérisé en ce que** le serveur de navigation comprend des moyens de couplage à un serveur annuaire électronique.

6. Portail de services de télécommunications selon la revendication 1, **caractérisé en ce que** le terminal de télécommunications est un téléphone mobile ou tout terminal avec un modem radio voix/données de type GSM ou GPRS ou UMTS ou USSD.

7. Portail de services de télécommunications selon l'une quelconque des revendications précédentes; **caractérisé en ce que** le serveur est couplé à un centre d'appel et **en ce que** les communications sont re-routées vers ce centre d'appel en cas d'échec de la reconnaissance vocale.

8. Procédé de navigation et de guidage pour véhicule comprenant un ordinateur de bord couplé à un système de radio positionnement, l'ordinateur de bord comportant une liaison avec un terminal de télécommunication, ledit terminal pouvant accéder à un serveur de navigation distant au moyen d'un réseau de téléphonie mobile, ledit serveur de navigation étant couplé à une interface de reconnaissance vocale, le procédé comprenant les étapes de:
- communication d'une destination par l'utilisateur au moyen dudit terminal et capture de la destination donnée par l'utilisateur par un microphone du terminal de télécommunication et transmission du signal correspondant qui est le signal de parole de l'utilisateur par le réseau;
- analyse acoustique par le serveur du signal de parole transmis et transmission du signal analysé à l'interface de reconnaissance vocale;
- transmission, par l'ordinateur de bord et/ou par l'utilisateur, de données de positionnement du véhicule en temps réel au serveur de navigation distant, par l'intermédiaire de la liaison avec le terminal de télécommunication;
- fourniture d'informations de guidage par le serveur de navigation distant;
- réception par l'ordinateur de bord desdites informations de guidage en temps réel par l'intermédiaire de la liaison avec le terminal de télécommunication, en réponse à la destination communiquée.

9. Procédé de navigation et de guidage pour véhicule selon la revendication 8, **caractérisé en ce que** :
- la destination donnée par l'utilisateur est captée par un microphone spécifique;
- le terminal de télécommunication comporte des moyens de codage de signal;
- le procédé comprend en outre :
- une étape de transmission du signal de parole au terminal de télécommunication;
- une étape de codage dudit signal de parole transmis par les moyens de codage;
- une étape de transmission du signal codé au serveur;
- le serveur comporte des moyens d'analyse acoustique du signal codé reçu;
- le procédé comprend en outre une étape de transmission du signal analysé à l'interface de reconnaissance vocale.

10. Procédé de navigation et de guidage pour véhicule selon la revendication 8, **caractérisé en ce que** :
- la destination donnée par l'utilisateur est captée par le microphone du terminal de télécommunication;
- le terminal de télécommunication comporte des moyens d'analyse acoustique;
- le procédé comprend en outre:
- une étape d'analyse du signal issu du microphone par les moyens d'analyse acoustiques; et
- une étape de transmission au serveur des coefficients acoustiques correspondant à ce signal;
- une étape de traitement des coefficients acoustiques par l'interface de reconnaissance vocale.

11. Procédé de navigation et de guidage pour véhicule selon la revendication 8, **caractérisé en ce que** :
- la destination donnée par l'utilisateur est captée par un microphone spécifique;
- le terminal de télécommunication comporte des moyens d'analyse acoustique;
- le procédé comprend en outre :
- une étape d'analyse par les moyens d'analyse acoustique, du signal issu du microphone; et
- une étape de transmission des coefficients acoustiques correspondant à ce signal, au serveur;
- une étape de traitement des coefficients acoustiques par l'interface de reconnaissance vocale.

12. Procédé de navigation et de guidage pour véhicule selon l'une quelconque des revendications 8 à 11, **caractérisé en ce que** :
- les informations de guidage reçues sont émises sous la forme de messages courts du type SMS ou de données via GSM Data ou GPRS ou UMTS ou USSD.

## Patentansprüche

1. Telekommunikationsdienstportal, welches mit zumindest einem Mobiltelekommunikationsnetz verbunden ist, und welches zumindest einen Streckennavigationsserver aufweist, der an eine Spracherkennungsschnittstelle angeschlossen ist, um Reatzeitführungsinformationen in Antwort auf einen Zielort zu liefern, der ihm durch den Benutzer mit Hilfe eines an das Netz angeschlossenen Telekommunikationsterminals mitgeteilt worden ist, **dadurch gekennzeichnet, dass** der Navigationsserver Vorrichtungen zur akustischen Analyse des empfangenen Signals aufweist.

2. Telekommunikationsdienstportal gemäß Anspruch 1, **dadurch gekennzeichnet, dass** die Spracherkennungsschnittstelle von einer integrierten Funktion des Servers sichergestellt ist.

3. Telekommunikationsdienstportal gemäß Anspruch 2, **dadurch gekennzeichnet, dass** es einen Verkehrsinformationsserver aufweist, der an den Streckennavigationsserver angekoppelt ist.

4. Telekommunikationsdienstportal gemäß Anspruch 1 oder Anspruch 2, **dadurch gekennzeichnet, dass** es eine kartographische Datenbasis umfasst, die an den Navigationsserver angeschlossen ist.

5. Telekommunikationsdienstportal gemäß irgendeinem der vorherigen Ansprüche, **dadurch gekennzeichnet, dass** der Navigationsserver Vorrichtungen zur Kopplung mit einem elektronischen Verzeichnisserver umfasst.

6. Telekommunikationsdienstportal gemäß Anspruch 1, **dadurch gekennzeichnet, dass** der Telekommunikationsterminal aus einem Mobiltelefon oder irgendeinem Terminal mit einem Sprach/Datenfunkmodem der Art GSM oder GPRS oder UMTS oder USSD besteht.

7. Telekommunikationsdienstportal gemäß irgendeinem der vorherigen Ansprüche, **dadurch gekennzeichnet, dass** der Server an ein Anrufzentrum angeschlossen ist, und dass die Kommunikationen im Falle des Scheiterns der Spracherkennung zu diesem Anrufzentrum hin zurückgeleitet werden.

8. Navigations- und Führungsverfahren für Kraftfahrzeuge mit einem Bordcomputer, der an ein Funkpositionierungssystem angeschlossen ist, wobei der Bordcomputer eine Verbindung mit einem Telekommunikationsterminal aufweist, wobei der Terminal mit Hilfe eines Mobiltelefonnetzes Zugang zu einem entfernt liegenden Navigationsserver bekommen kann, wobei der Navigationsserver an eine Spracherkennungsschnittstelle angeschlossen ist, wobei das Verfahren die Schritte aufweist:
- Mitteilung eines Zielortes durch den Benutzer mit Hilfe des Terminals und Erfassung des von dem Benutzer gegebenen Zielortes über ein Mikrophon des Telekommunikationsterminals und Übertragung des entsprechenden Signals, welches aus dem Sprachsignal des Benutzers besteht, über das Netz;
- akustische Analyse des übertragenen Sprachsignals durch den Server und Übertragung des analysierten Signals an die Spracherkennungsschnittstelle;
- Übertragung durch den Bordcomputer und/oder den Benutzer von Positionsdaten des Fahrzeugs in Realzeit an den entfernt liegenden Navigationsserver mittels der Verbindung mit dem Telekommunikationsterminal;
- Lieferung von Führungsinformationen durch den entfernt liegenden Navigationsserver;
- Empfang der Realzeitführungsinformationen durch den Bordcomputer mit Hilfe der Verbindung mit dem Telekommunikationsterminal und in Antwort auf den mitgeteilten Zielort.

9. Navigations- und Führungsverfahren für Kraftfahrzeuge gemäß Anspruch 8, **dadurch gekennzeichnet, dass**:
- der von dem Benutzer angegebene Zielort von einem speziellen Mikrophon erfasst wird;
- der Telekommunikationsterminal Signalcodierungsvorrichtungen aufweist;
- das Verfahren außerdem umfasst:
- einen Übertragungsschritt des Sprachsignals an den Telekommunikationsterminal;
- einen Codierungsschritt des übertragenen Sprachsignals durch die Codierungsvorrichtungen;
- einen Übertragungsschritt des codierten Signals an den Server;
- der Server Vorrichtungen zur akustischen Analyse des empfangenen, codierten Signals aufweist;
- das Verfahren außerdem einen Übertragungsschritt des analysierten Signals an die Spracherkennungsschnittstelle umfasst.

10. Navigations- und Führungsverfahren für Kraftfahrzeuge gemäß Anspruch 8, **dadurch gekennzeichnet, dass**:
- der von dem Benutzer angegebene Zielort von dem Mikrophon des Telekommunikationsterminals erfasst wird;
- der Telekommunikationsterminal akustische Analysevorrichtungen aufweist;
- das Verfahren außerdem umfasst:
- einen Analyseschritt des von dem Mikrophon ausgesandten Signals durch die akustischen Analysevorrichtungen; und
- einen Übertragungsschritt der akustischen Koeffizienten entsprechend diesem Signal an den Server;
- einen Verarbeitungsschritt der akustischen Koeffizienten durch die Spracherkennungsschnittstelle.

11. Navigations- und Führungsverfahren für Kraftfahrzeuge gemäß Anspruch 8, **dadurch gekennzeichnet, dass**:
- der von dem Benutzer angegebene Zielort von einem speziellen Mikrophon erfasst wird;
- der Telekommunikationsterminal akustische Analysevorrichtungen aufweist;
- das Verfahren außerdem umfasst:
- einen Analyseschritt des von dem Mikrophon ausgesandten Signals durch die akustischen Analysevorrichtungen; und
- einen Übertragungsschritt der akustischen Koeffizienten entsprechend diesem Signal an den Server;
- einen Verarbeitungsschritt der akustischen Koeffizienten durch die Spracherkennungsschnittstelle.

12. Navigations- und Führungsverfahren für Kraftfahrzeuge gemäß irgendeinem der Ansprüche 8 bis 11, **dadurch gekennzeichnet, dass**
- die empfangenen Führungsinformationen in Form von Kurzmitteilungen der Art SMS oder von Daten über GSM Data oder GPRS oder UMTS oder USSD ausgesandt werden.

## Claims

1. Telecommunications services portal linked to at least one mobile telecommunications network including at least one route navigation server coupled to a voice recognition interface in order to provide guidance information in real time, in response to a destination which has been communicated to it by the user using a telecommunications terminal connected to said network, **characterized in that** the navigation server includes means for acoustic analysis of the received signal.

2. Telecommunications services portal according to claim 1, **characterized in that** the voice recognition interface is provided by an integrated function of the server.

3. Telecommunications services portal according to claim 2, **characterized in that** it includes a traffic information server coupled to the route navigation server.

4. Services portal according to claim 1 or claim 2, **characterized in that** it includes a cartographic database coupled to the navigation server.

5. Services portal according to any one of the preceding claims, **characterized in that** the navigation server includes means for coupling to an electronic telephone directory server.

6. Telecommunications services portal according to claim 1, **characterized in that** the telecommunications terminal is a mobile telephone or any terminal having a voice/data radio modem of the GSM or GPRS or UMTS or USSD type.

7. Telecommunications services portal according to any one of the preceding claims, **characterized in that** the server is coupled to a call centre, and **in that** communications are re-routed to said call centre in the event of failure of the voice recognition.

8. Navigation and guidance process for a vehicle including an onboard computer coupled to a radio positioning system, the onboard computer having a link with a telecommunications terminal, said terminal being capable of accessing a remote navigation server via a mobile telephone network, said navigation server being coupled to a voice recognition interface, the process comprising the following steps:
- communication of a destination by the user using said terminal, and capture of the destination given by the user by a microphone of the telecommunications terminal, and transmission of the corresponding signal, which is the user's speech signal, by the network;
- acoustic analysis by the server of the transmitted speech signal and transmission of the analysed signal to the voice recognition interface;
- transmission, by the onboard computer and/or by the user, of positioning data of the vehicle in real time to the remote navigation server, via the link with the telecommunications terminal;
- provision of guidance information by the remote navigation server;
- reception by the onboard computer of said guidance information in real time via the link with the telecommunications terminal, in response to the communicated destination.

9. Navigation and guidance process for a vehicle according to claim 8, **characterized in that**:
- the destination given by the user is captured by a specific microphone;
- the telecommunications terminal includes signal-encoding means;
- the process further includes:
- a step in which the speech signal is transmitted to the telecommunications terminal;
- a step in which said transmitted speech signal is encoded by the encoding means;
- a step in which the encoded signal is transmitted to the server;
- the server includes means for acoustic analysis of the encoded signal received;
- the process further includes a step in which the analysed signal is transmitted to the voice recognition interface.

10. Navigation and guidance process for a vehicle according to claim 8, **characterized in that**:
- the destination given by the user is captured by the microphone of the telecommunications terminal;
- the telecommunications terminal includes means for acoustic analysis;
- the process further includes:
- a step in which the signal issuing from the microphone is analysed by the acoustic analysis means; and
- a step in which the acoustic coefficients corresponding to said signal are transmitted to the server;
- a step in which the acoustic coefficients are processed by the voice recognition interface.

11. Navigation and guidance process for a vehicle according to claim 8, **characterized in that**:
- the destination given by the user is captured by a specific microphone;
- the telecommunications terminal includes means for acoustic analysis;
- the process further includes:
- a step in which the signal issuing from the microphone is analysed by the acoustic analysis means; and
- a step in which the acoustic coefficients corresponding to said signal are transmitted to the server;
- a step in which the acoustic coefficients are processed by the voice recognition interface.

12. Navigation and guidance process for a vehicle according to any one of claims 8 to 11, **characterized in that**:
- the guidance information received is issued in the form of short messages of the SMS type or in the form of data via GSM Data or GPRS or UMTS or USSD.
